# EUROPEAN PATENT APPLICATION

(11) **EP 1 511 002 A2**
(43) Date of publication of application: **02.03.2005**
(21) Application number: 04019613.1
(22) Date of filing: 18.08.2004
(51) Int. Cl.: G09G 5/36

(54) **Information processing apparatus, semiconductor device for display control and video stream data display control method**

(30) Priority: 28.08.2003 JP 2003304778
(71) Applicant: Kabushiki Kaisha Toshiba, Tokyo 105-8001 (JP)
(72) Inventor: Iwaki, Tsutomu c/o Toshiba Corporation, Minato-ku Tokyo 105-8001 (JP)
(74) Representative: Henkel, Feiler & Hänzel

(57) **Abstract**

An information processing apparatus includes a display control circuit (2A) capable of processing video stream data, and a circuit (7) which is provided in the display control circuit and which executes pixel level processing with respect to the video stream data.

## Description

The present invention relates to an information processing apparatus including a display control circuit capable of processing video stream data and a display memory, a semiconductor device for display control, and a video stream data display control method.

In recent years, various personal computers having a moving image display function have been developed and provided. Various techniques have been proposed in order to improve the quality of moving images displayed on display devices such as a liquid crystal display (LCD) for computer systems processing moving images.

For example, JPN. PAT. APPLN. KOKAI Publication No. 2003-143556 discloses the following technique in order to reduce scanning line noise or blur in a moving image. According to the technique, data equivalent to continuous three fields is read at the same timing with respect to interlace format video signal input using two frame memories and three line memories. Then, motion detection is made using the same interfield data, and thereafter, transformation from interlaced to non-interlaced and overdrive processing are executed using the detection result.

JPN. PAT. APPLN. KOKAI Publication No. 10-97227 discloses the following technique in order to realize moving image display having high response. According to the technique, based on the output from a circuit for distinguishing a still image from a moving image, a facing electrode drive amplifier applies a voltage to a facing electrode. In the case of the moving image, the amplifier applies a voltage lower than in the case of the still image to the facing electrode.

USP No. 6,414,664 discloses the following technique in order to obtain high-quality and high-contrast images. According to the technique, several lookup tables showing contrast setting with respect to an LCD are prepared, and one lookup table selected by users is selected.

Video stream data by DVD reproduction and received via TV is displayed and output to a liquid crystal display. In this case, if the video stream data is output intact without being processed, the following problem arises. More specifically, color reproduction is lost resulting from the response speed of liquid crystals; as a result, the displayed image quality is reduced. Image quality improvement on a plane (frame, line, block, etc.) is made with respect to the display image. By so doing, the display quality is slightly improved as compared with the case where the video stream data is output intact without being processed. However, it is difficult to expect satisfactorily fine color reproduction.

According to the technique of improving the quality of moving images for computer systems processing moving images, there exists no technique of realizing improvement of fine and satisfactory image quality with a simple configuration at low cost.

Thus, it is desired to readily realize the improvement of fine and satisfactory image quality with a simple configuration at low cost.

According to one aspect of the present invention, there is provided an information processing apparatus, comprising a display control circuit capable of processing video stream data; and a circuit which is provided in the display control circuit and which executes pixel level processing with respect to the video stream data.

According to another aspect of the present invention, there is provided a semiconductor device for display control, comprising a graphics data processing circuit which inputs three-dimensional graphics data and generates display data based on the input data; a video stream data processing circuit which inputs video stream data and generates display data based on the input data; a programmable pixel shader which is provided in the graphics data processing circuit and subjects the input graphics data to three-dimensional shading; and a circuit which executes pixel level processing with respect to the input video stream data using the programmable pixel shader provided in the graphics data processing circuit in the video stream data processing circuit.

According to still another aspect of the present invention, there is provided a video stream data display control method, comprising inputting YUV format video stream data; executing pixel level processing with respect to the input video stream data; and generating and outputting RGB color display data corresponding to the pixel-level processed video stream data.

This summary of the invention does not necessarily describe all necessary features so that the invention may also be a sub-combination of these described features.

The invention can be more fully understood from the following detailed description when taken in conjunction with the accompanying drawings, in which:
FIG. 1 is a block diagram to explain the basic configuration of an information processing apparatus according to an embodiment of the present invention;
FIG. 2 is a block diagram to explain the basic configuration considering the cost of the information processing apparatus according to the embodiment of the present invention;
FIG. 3 is a block diagram showing the configuration of an information processing apparatus according to the embodiment of the present invention;
FIG. 4 is a block diagram showing the configuration of a graphic processing unit included in the information processing apparatus according to the embodiment of the present invention;
FIG. 5 is a block diagram showing another configuration of the graphics processing unit included in the information processing apparatus according to the embodiment of the present invention; and
FIG. 6 is a flowchart to explain the procedure of the information processing apparatus according to the embodiment of the present invention.

Embodiments of the present invention will be described below with reference to the accompanying drawings.

An information processing apparatus of the embodiment has the basic configuration given below. The information processing apparatus is provided with a display control circuit calling graphic controller, VGA controller and graphic processing unit (GPU). In the display control circuit, a pixel level effect circuit is inserted into a video stream data path, which inputs YUV format video stream data and outputs it as RGB display data. The pixel level effect circuit is realized by a programmable pixel shader, which executes par-pixel shading using an application programming interface (API).

According to the embodiment, the display control circuit has the following configuration in order to realize the simple configuration considering the cost. The programmable pixel shader inserted into a three-dimensional (3D) graphics data path is used as the pixel level effect circuit inserted into the video stream data path.

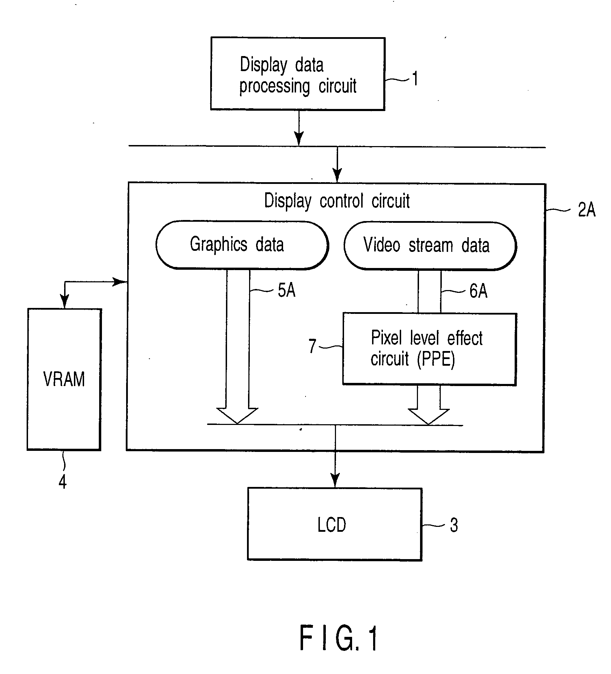

FIG. 1 shows the basic configuration of the information processing apparatus according of the present invention. The information processing apparatus comprises display data processing circuit 1, display control circuit 2A, LCD 3 and video RAM (VRAM) 4.

The display data processing circuit 1 includes a CPU, operating system (OS) resident in main memory, etc. The display data processing circuit 1 realizes YUV format video stream data input/output processing by DVD reproduction and video port input and graphics data input/output processing. The display control circuit 2A is formed using a display control chip, which is called as graphics controller, VGA controller and GPU. The display control circuit 2A includes graphics data processing circuit (path) 5A and video stream data processing circuit (path) 6A.

The video stream data path 6A is provided with a pixel level effect circuit (PPE) 7, which gives par-pixel effect to video stream data.

The pixel level effect circuit (PPE) 7 is realized by a programmable pixel shader having a par-pixel shading function.

When receiving YUV format video stream data from the display data processing circuit 1, the display control circuit 2A supplies the video stream data onto the video stream data path 6A.

Then, the video stream data is supplied to the pixel level effect circuit (PPE) 7 on the video stream data path 6A.

The pixel level effect circuit (PPE) 7 gives par-pixel effect to the input video stream data in order to prevent image quality reduction resulting from display response speed peculiar to the LCD 3. The video stream data to which the pixel level effect circuit (PPE) 7 gives the effect (having improved image quality) is further subjected to predetermined processing on the video stream data path 6A. Thereafter, the video stream data is output to the LCD 3 as RGB color display data, and displayed on the LCD 3 as moving images.

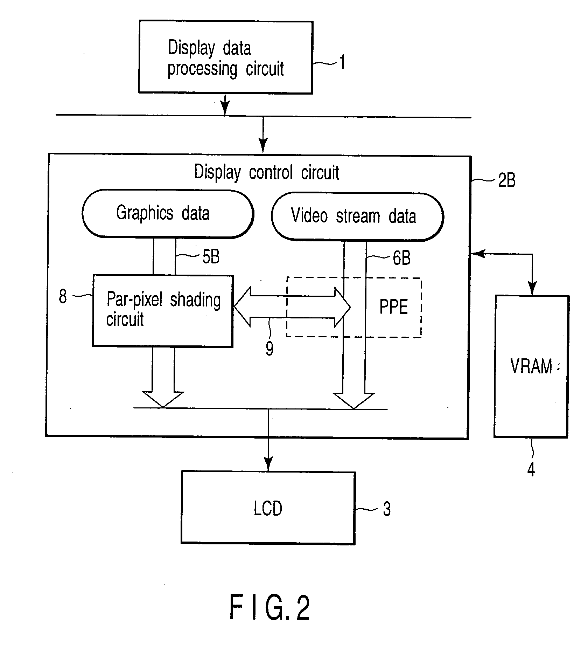

FIG. 2 shows the simple configuration considering the cost to realize the apparatus shown in FIG. 1. According to the configuration, the information processing apparatus comprises display data processing circuit 1, display control circuit 2B, LCD 3 and video RAM (VRAM) 4. The display data processing circuit 1 includes a CPU, OS, like the basic configuration shown in FIG. 1. The display data processing circuit 1 realizes YUV format video stream data input/output processing by DVD reproduction and video port input and graphics data input/output processing. The display control circuit 2B is formed using a display control chip, like the basic configuration shown in FIG. 1. The display control circuit 2B includes graphics data processing circuit (path) 5B and video stream data processing circuit (path) 6B.

The graphics data path 5B is provided with a shading circuit (i.e., programmable pixel shader) 8, which executes par-pixel shading with respect to 3D graphics data.

The video stream data path 6B is provided with a pixel shader circuit (path) 9 using the programmable pixel shader 8 provided on the graphics data path 5B. The pixel shader circuit (path) 9 realizes a pixel level effect circuit (PPE) 7, which gives par-pixel effect to video stream data input to the video stream data path 6B.

When receiving YUV format video stream data from the display data processing circuit 1, the display control circuit 2B supplies the video stream data onto the video stream data path 6B.

On the video stream data path 6B, the video stream data is input to the programmable pixel shader 8 provided on the graphics data path 5B via the path 9 used as the pixel shader circuit to give par-pixel effect to the video stream data. Thereafter, the video stream data is further subjected to predetermined processing on the video stream data path 6B, and output to the LCD 3 as RGB color display data.

In the manner described above, on the video stream data path 6B, par-pixel effect is given to the input video stream data using the programmable pixel shader 8 provided on the graphics data path 5B. Thus, the input video stream data is displayed and output on the LCD 3 as moving images.

The configuration described above is provided, and thereby, it is possible to give par-pixel effect to the video stream data with the configuration effectively using the programmable pixel shader provided on the graphics data path 5B for shading.

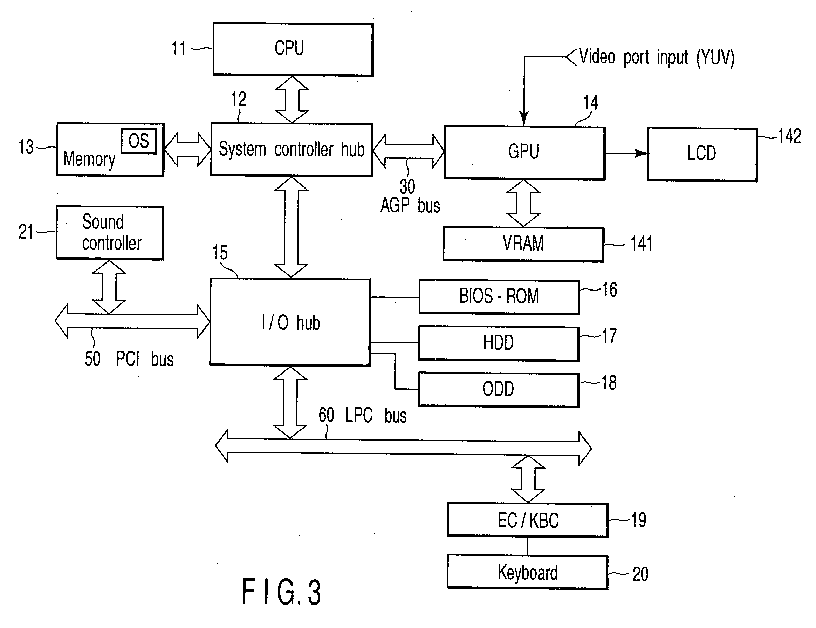

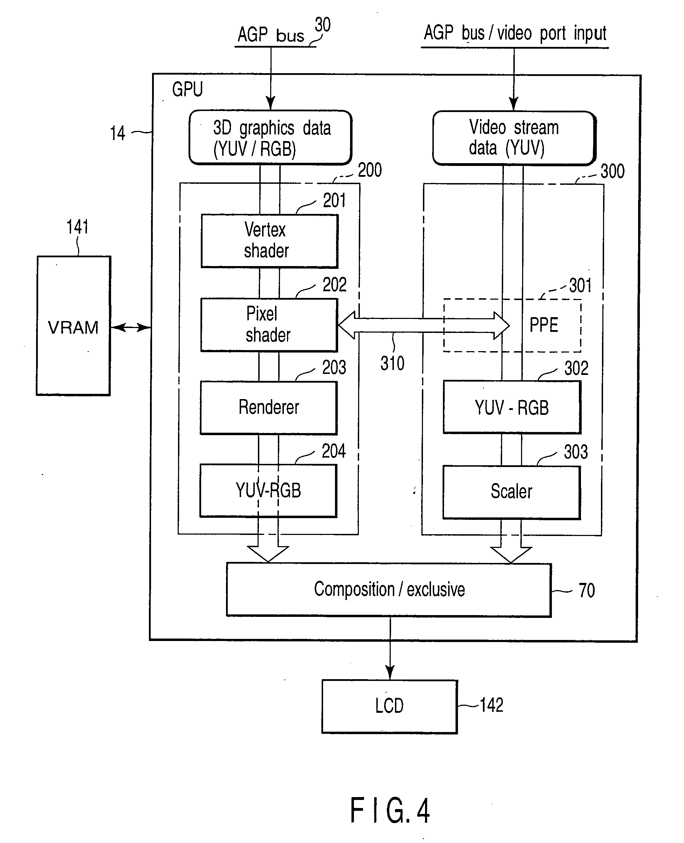

FIG. 3 and FIG. 4 show the configuration of a computer system for realizing the configuration shown in FIG. 2. FIG. 3 shows the configuration of a personal computer to which the present invention is applied. FIG. 4 shows the configuration of a graphic processing unit (GPU) shown in FIG. 3.

The personal computer shown in FIG. 3 includes a CPU 11, system controller hub 12, memory (main memory) 13, GPU 14, VRAM (video RAM) 141 and display device 142. The personal computer further includes an I/O hub 15, BIOS-ROM 16, hard disk drive (HDD) 17, optical disk drive 18, keyboard/embedded controller (EC/KBC) 19, keyboard 20 and sound controller 21. Of components shown in FIG. 2, the display data processing circuit 1 is realized by an OS resident in the CPU 11 and an OS resident in the main memory 13. The display control circuit 2B is equivalent to the GPU 14, and the LCD 3 is equivalent to the display device 142. The video RAM (VRAM) 4 is equivalent to the VRAM (video RAM) 141.

The CPU 11 is used for controlling the operation of the computer, and executes various processing according to the OS loaded from the hard disk drive 17 to the main memory 13, application and utility programs. In the embodiment, the display data processing circuit 1 shown in FIG. 1 and FIG. 2 is realized according to the control based on the OS of the CPU 11. The CPU 11 executes input/output control processing for display data, that is, 2D graphics data, still image data, 3D graphics data and video stream data. For example, when receiving reproduction video stream data from the optical disk drive 18 and the hard disk drive (HDD) 17, the CPU 11 transfers the video stream data to the GPU 14 via AGP bus 30. Further, the CPU 11 transfers video stream data input from TV tuner (not shown) and communication means to the GPU 14 via the AGP bus 30.

The GPU 14 is an integrated device including a microprocessor. The GPU 14 controls the display drive of the display device 121 such as an LCD according to the OS control executed by the CPU 11. Further, the GPU 14 controls the display drive of external display devices connected via various external display connection interfaces such as CRT terminal, DVI terminal and TV terminal (these are not shown). The GPU 14 is provided with a video stream data processing circuit (path) having a pixel level effect function as the constituent component of the present invention. The configuration and components of the GPU 14 will be described later with reference to FIG. 4.

The keyboard/embedded controller (EC/KBC) 19 is an integrated device including a microprocessor having functions such as system power management and a keyboard controller. In this case, input processing is executed using the keyboard 20 and pointing device (not shown).

As shown in FIG. 4, the GPU 14 includes a graphics data processing circuit 200 and a video stream data processing circuit 300. The graphics data processing circuit 200 inputs RGB or YUV format 3D graphics data, and outputs 3D (including 2D) RGB display data. The video stream data processing circuit 300 inputs YUV format video stream data, and RGB moving image display data. The GPU 14 further includes a still image data processing circuit (not shown). The graphics data processing circuit 200 is equivalent to the graphics data path 5B shown in FIG. 2. The video stream data processing circuit 300 is equivalent to the video stream data path 6B shown in FIG. 2. In addition, the GPU 14 includes a display data output control circuit 70. The display data output control circuit 70 makes composition of outputs of the foregoing circuits (paths) or exclusively controls them, and sends display output RGB data to the display device 121 such as an LCD.

The graphics data processing circuit 200 is provided with a vertex shader 201, programmable pixel shader 202, renderer 203 and YUV-RGB converter circuit 204.

The vertex shader 201 executes shading relevant to planes (frame/line/block) with respect to 3D graphics data input to the graphics data processing circuit 200. The programmable pixel shader 202 provides a programmable pixel level effect by using a par-pixel shading function (of calculating a par-pixel effect). Thus, the programmable pixel shader 202 gives a pixel level effect to the 3D graphics data subjected to shading by the vertex shader 201. The renderer 203 generates the final image in CG video based on 3D and 2D graphics data. The YUV-RGB converter circuit 204 makes YUV-RGB conversion with respect to YUV format graphics data.

The video stream data processing circuit 300 is provided with an input/output circuit 310 for using the programmable pixel shader 202. The input/output circuit 310 is used to realize a pixel level effect circuit (PPE) 301 in the video stream data processing circuit 300 using the programmable pixel shader 202 provided in the graphics data processing circuit 200. The video stream data processing circuit 300 is further provided with a YUV-RGB converter circuit 302 and a scaler 303. The YUV-RGB converter circuit 302 converts YUV format video stream data into RGB data. The scaler 303 makes a change of display screen size with respect to RGB display data.

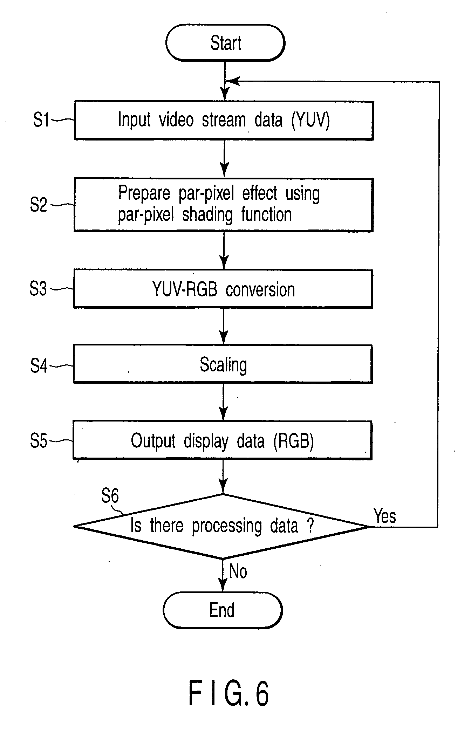

The video stream data processing operation by the GPU 14 shown in FIG. 4 will be described below with reference to the flowchart shown in FIG. 6.

In the GPU 14, the YUV format video stream data input via AGP bus 30 and video port is supplied to the video stream data processing circuit 300.

In the video stream data processing circuit 300, the input/output circuit 310 realizes the pixel level effect circuit (PPE) 301 on the video stream data processing circuit 300 using the programmable pixel shader 202 provided in the graphics data processing circuit 200. When receiving the YUV format video stream data (step S1 in FIG. 6), the video stream data processing circuit 300 gives a par-pixel effect to the input data (step S2). In this case, the video stream data processing circuit 300 gives the par-pixel effect by using the circuit (PPE) 301 providing a pixel level effect realized in the video stream data processing circuit 300. The par-pixel effect is given for each processing object pixel of the video stream data in the following manner. The par-pixel effect is given by calculating an effect per pixel using predetermined functions in accordance with color, luminance and setting values of peripheral n × m pixels (n and m are variables depending on ambient conditions of processing object pixels).

The YUV-RGB converter circuit 302 converts the video stream data to which the effect is given by the pixel level effect circuit (PPE) 301 into RGB data (step S3). Further, the RGB data thus converted is subjected to scaling by the scaler 303 (step S4), and thereafter, sent to the display device 121 as LCD display data by the display data output control circuit 70 (step S5). The processing for giving the par-pixel effect is executed with respect to all input video stream data. Thus, the video stream data to which the par-pixel effect is given is sent as RGB display data to the display device 121 comprising an LCD.

As described above, the video stream data processing circuit 300 gives the par-pixel effect to the input video stream data using the programmable pixel shader 202 provided in the graphics data processing circuit 200, and outputs it as RGB data. By so doing, it is possible to provide fine image quality with respect to the video stream data displayed on the display device 121 comprising an LCD with a simple configuration at low cost.

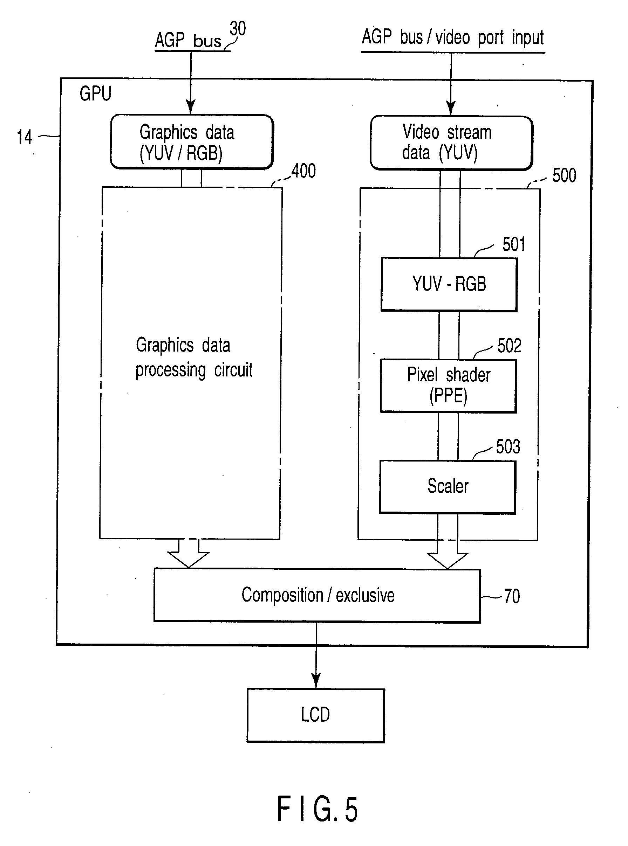

FIG. 5 shows another configuration of the GPU 14 according to the embodiment of the present invention. The configuration of the GPU 14 is based on the basic configuration shown in FIG. 1. In this case, the pixel level effect circuit (PPE) is given without using components included in a graphics data processing circuit 400. More specifically, a video stream data processing circuit 500 is provided with a programmable pixel shader 502, and the pixel level effect circuit (PPE) is given using the programmable pixel shader 502. The video stream data processing circuit 500 shown in FIG. 5 has a configuration in which the programmable pixel shader 502 is interposed between the YUV-RGB converter circuit 501 and scaler 503. The programmable pixel shader 502 gives a par-pixel effect to the video stream data converted into RGB data by the YUV-RGB converter circuit 501.

With the configuration described above, it is possible to provide fine image quality with respect to the video stream data displayed on the display device 121 comprising an LCD. In addition, an optimal pixel level effect for moving image display on the display device 121 comprising an LCD is given to only video stream data. Therefore, display data having optimal image quality is generated with respect to still images, moving images, 2D and 3D graphics data.

The configuration and components described in the foregoing embodiments are merely one example. In this case, various configurations are realized depending on functional circuits built into the various display control chips of the graphics controller, VGA controller and GPU.

According to the present invention, it is possible to readily realize fine image quality with a simple configuration at low cost in computer systems processing moving images.

## Claims

1. An information processing apparatus, **characterized by** comprising:
a display control circuit (2A or 2B) capable of processing video stream data; and
a circuit (7 or 8) which is provided in the display control circuit and which executes pixel level processing with respect to the video stream data.

2. The apparatus according to claim 1, **characterized in that** the pixel level processing circuit (7 or 8) includes a programmable pixel shader (202 or 502).

3. The apparatus according to claim 1, **characterized in that** the display control circuit (2A or 2B) includes:
a three-dimensional graphics data processing circuit (200) which is provided with a programmable pixel shader and which executes three-dimensional shading; and
a video stream data processing circuit (300) which uses the programmable pixel shader provided in the three-dimensional graphics data processing circuit.

4. The apparatus according to claim 3, **characterized in that** the video stream data processing circuit (300) further includes a circuit (302) which converts YUV format video stream data into RGB color display data and inputs YUV format video stream data while outputting RGB color display data.

5. A semiconductor device for display control, **characterized by** comprising:
a graphics data processing circuit (200) which inputs three-dimensional graphics data and generates display data based on the input data;
a video stream data processing circuit (300) which inputs video stream data and generates display data based on the input data;
a programmable pixel shader (202) which is provided in the graphics data processing circuit and subjects the input graphics data to three-dimensional shading; and
a circuit (301) which executes pixel level processing with respect to the input video stream data using the programmable pixel shader provided in the graphics data processing circuit in the video stream data processing circuit.

6. A video stream data display control method, **characterized by** comprising:
inputting YUV format video stream data (S1);
executing pixel level processing with respect to the input video stream data (S2); and
generating and outputting RGB color display data corresponding to the pixel-level processed video stream data (S3 to S5).

7. The method according to claim 6, **characterized in that** the pixel level processing includes giving a pixel level effect to the input video stream data using a programmable pixel shader.

8. The method according to claim 6, **characterized in that** the pixel level processing includes giving a pixel level effect to the input video stream data using a three-dimensional programmable pixel shader provided in a three-dimensional graphics data processing circuit.
